# FASCICULE DE BREVET EUROPEEN

(11) **EP 2 010 774 B1**
(45) Date de publication et mention de la délivrance du brevet: **02.12.2009**
(21) Numéro de dépôt: 07731373.2
(22) Date de dépôt: 26.04.2007
(51) Int. Cl.: F02D 9/10, F16K 31/04, F16K 11/052, F16K 11/22

(54) **VANNE A DEUX PAPILLONS ACTIONNES PAR UN MOTEUR COMMUN**
DURCH EINEN GEMEINSAMEN MOTOR ANGETRIEBENES DOPPELKLAPPENVENTIL
DUAL BUTTERFLY VALVE DRIVEN BY A COMMON DRIVE MOTOR

(30) Priorité: 26.04.2006 FR 0603711
(43) Date de publication de la demande: 07.01.2009
(73) Titulaire: Valeo Systèmes de Contrôle Moteur, 95800 Cergy (FR)
(72) Inventeur: LEROUX, Samuel, F-78300 Poissy (FR); ALBERT, Laurent, F-95810 Vallangoujard (FR); DAVOULT, Guillaume, F-95310 Saint-Ouen l'Aumone (FR)
(74) Mandataire: Rolland, Jean-Christophe
(86) Numéro de dépôt international: PCT/FR2007/000718
(87) Numéro de publication internationale: WO 2007/125205

(56) Documents cités:
- EP-A1- 1 515 023
- EP-A2- 0 388 505
- EP-A2- 1 170 487
- US-A- 4 749 004
- US-A1- 2005 241 702

## Description

La présente invention concerne une vanne destinée par exemple à être implantée dans un circuit d'admission d'air d'un moteur thermique.

Une telle vanne est connue du document EP-A-0 388 505.

### ARRIERE PLAN DE L'INVENTION

Un tel circuit d'admission comprend une voie refroidie et une voie non refroidie qui sont reliées à la tubulure d'admission du moteur thermique par des vannes. Il en résulte un poids et un encombrement importants du moteur rendant délicate son implantation sur le véhicule, une relative complexité du moteur rendant sa maintenance difficile, et un nombre de pièces relativement élevé augmentant le risque de défaillance.

### OBJET DE L'INVENTION

Dans le cadre de l'invention, on a imaginé remplacer ces vannes par une vanne unique comprenant un corps délimitant un premier conduit et un deuxième conduit qui sont respectivement reliés à la voie non refroidie et à la voie refroidie et qui débouchent dans un troisième conduit relié à la tubulure d'admission. Le premier conduit et le deuxième conduit sont pourvus d'un premier papillon et d'un deuxième papillon ayant chacun une position d'ouverture et une position de fermeture. Le premier papillon doit pouvoir être maintenu en position entre la position d'ouverture et la position de fermeture afin de permettre un réglage de l'étranglement qu'il procure tandis que le deuxième papillon doit pouvoir être déplacé soit dans sa position d'ouverture soit dans sa position de fermeture sans qu'une position intermédiaire soit nécessaire. La vanne possède ainsi un état de fonctionnement normal dans lequel le premier papillon est réglé en position entre sa position d'ouverture et sa position de fermeture tandis que le deuxième papillon est fermé, un état de blocage dans lequel le premier papillon et le deuxième papillon sont en position de fermeture, et un état de refroidissement dans lequel le premier papillon est en position de fermeture et le deuxième papillon est en position d'ouverture. On aurait pu envisager un actionnement des papillons réalisé au moyen de deux moteurs couples associés chacun à un des papillons. L'utilisation de deux moteurs couples rendrait cependant la vanne complexe, encombrante et relativement coûteuse.

Un but de l'invention est de fournir un moyen de commande des papillons qui soit simple et économique.

### RESUME DE L'INVENTION

A cet effet, on prévoit, selon l'invention, une vanne comprenant un corps délimitant des premier et deuxième conduits qui débouchent dans un troisième conduit et qui sont pourvus respectivement d'un premier papillon et d'un deuxième papillon. Le premier papillon est solidaire d'une première roue de transmission reliée à un arbre de sortie d'un moteur d'actionnement pour être déplaçable entre une première position de fermeture et une deuxième position de fermeture situées de part et d'autre d'une position d'ouverture du premier conduit. Le deuxième papillon est monté pour pivoter sur une deuxième roue de transmission reliée au moteur d'actionnement, et est relié à la deuxième roue de transmission par un élément d'entraînement unidirectionnel positif lorsque le premier papillon est déplacé de sa position d'ouverture à sa deuxième position de fermeture de manière à alors entraîner le deuxième papillon d'une position de fermeture vers une position d'ouverture du deuxième conduit, la vanne comportant un organe de rappel du deuxième papillon vers sa position de fermeture lorsque le premier papillon est déplacé vers sa première position de fermeture.

Ainsi, le premier papillon peut être réglé en position entre sa position d'ouverture et sa première position de fermeture sans que le deuxième papillon quitte sa position de fermeture dans laquelle il est maintenu par l'organe de rappel. Lorsque le premier papillon est déplacé vers sa deuxième position de fermeture, l'élément d'entraînement unidirectionnel provoque le déplacement du deuxième papillon vers sa position d'ouverture. Le moteur d'actionnement entraîne de la sorte la première roue de transmission, et donc le premier papillon, et la deuxième roue de transmission, le deuxième papillon n'étant solidarisé en rotation par l'élément d'entraînement que dans un seul sens de rotation.

De préférence, le moteur d'actionnement est un moteur à courant continu.

Un tel moteur présente un couple supérieur au couple développé par un moteur couple.

Selon un premier mode de réalisation, le deuxième paillon est solidaire d'un axe ayant une extrémité en saillie du corps et pourvue d'un support radial pour coopérer avec une butée solidaire de la deuxième roue de transmission et, de préférence, le support radial est équipé d'un doigt parallèle à l'axe et reçu à coulissement dans une gorge en arc de cercle qui est ménagée sur la deuxième roue de transmission et dont une extrémité forme la butée d'entraînement. L'organe d'entraînement a ainsi une structure simple.

Avantageusement, la deuxième roue de transmission est reliée au moteur d'actionnement par la première roue de transmission.

La première roue de transmission constitue un moyen simple de transmission du mouvement de l'arbre de sortie du moteur d'actionnement à la deuxième roue de transmission.

Selon un deuxième mode de réalisation, le deuxième papillon est solidaire d'un axe ayant une extrémité en saillie du corps et pourvue d'un support solidaire en rotation de l'axe, la deuxième roue de transmission est montée libre en rotation sur cette extrémité de l'axe et est reliée au support par un ressort de torsion formant l'organe de rappel et positionné pour rappeler le support vers la position de fermeture du deuxième papillon.

Un seul ressort peut ainsi assurer le rappel des deux volets en position de fermeture.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue en élévation d'une vanne conforme à un premier mode de réalisation de l'invention,
- la figure 2 est une vue en coupe selon la ligne II-II de la figure 1,
- la figure 3 est une vue en coupe selon la ligne III-III de la figure 1, le premier papillon étant dans sa position d'ouverture et le deuxième papillon étant dans sa position de fermeture,
- la figure 4 est une vue en coupe selon la ligne IV-IV de la figure 3,
- la figure 5 est une vue partielle en perspective, le premier papillon étant dans une position intermédiaire entre sa première position de fermeture et sa position d'ouverture et le deuxième papillon étant dans sa position de fermeture,
- les figures 6 et 7 sont des vues analogues à celle de la figure 5, le premier papillon étant dans sa deuxième position de fermeture et le deuxième papillon étant respectivement en position de fermeture et en position d'ouverture,
- les figures 8 à 10 sont des vues analogues aux figures 5 à 7 d'une vanne conforme à un deuxième mode de réalisation,
- la figure 11 est une vue analogue à la figure 8, le premier papillon étant en position d'ouverture.

### DESCRIPTION DETAILLEE DE L'INVENTION

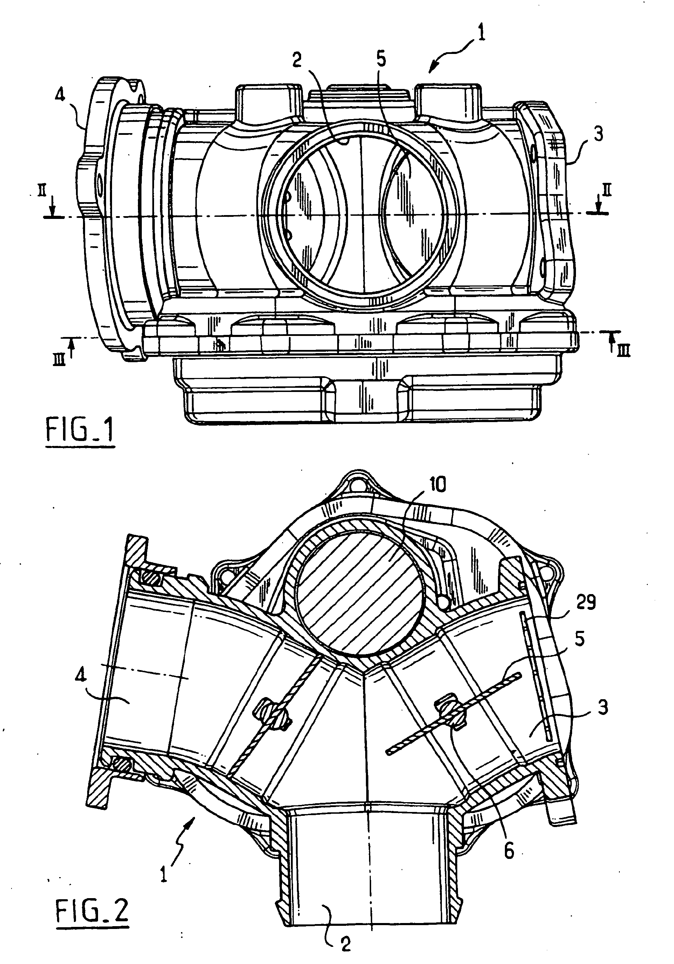

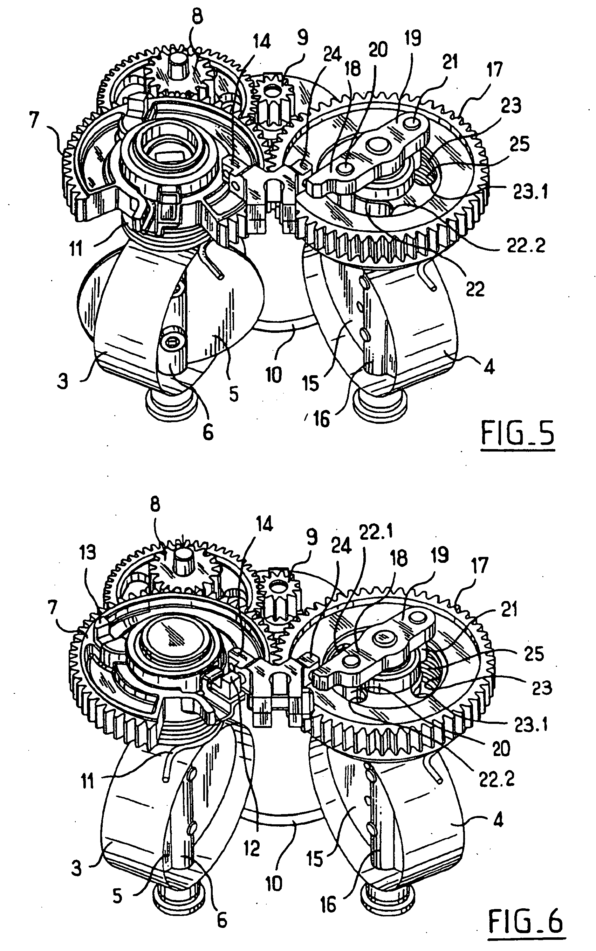

En référence aux figures 1 à 7, la vanne conforme à l'invention comprend un corps généralement désigné en 1 délimitant un premier conduit 3 et un deuxième conduit 4 débouchant dans un troisième conduit 2. Le corps 1 et les conduits 3 et 4 ne sont représentés qu'en partie sur les figures 5 à 7.

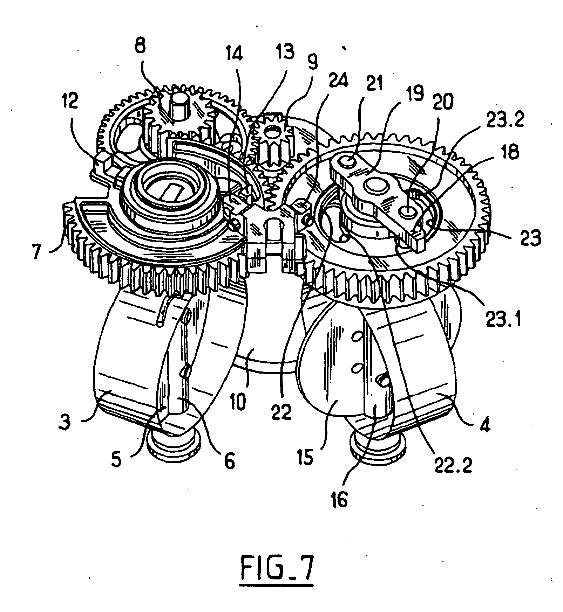

Le premier conduit 3 est équipé d'un premier papillon 5 solidaire d'un axe 6 monté pour pivoter sur le corps 1. L'axe 6 comprend une extrémité s'étendant en saillie du corps 1 et solidaire en rotation d'une première roue de transmission 7, dentée, en prise avec un engrenage intermédiaire 8 lui-même en prise avec un pignon 9 solidaire d'un arbre de sortie d'un moteur 10 monté sur le corps 1. Le moteur 10 est un moteur à courant continu connu en lui-même relié à une source d'énergie électrique et à un module de commande qui sont également connus en eux-mêmes et ne sont pas représentés sur les figures. Un ressort de torsion 11 s'étend hélicoïdalement autour de ladite extrémité de l'axe 6 en ayant une extrémité reliée à la roue de transmission 7 et une extrémité reliée au corps 1. Le ressort 11 rappelle le papillon 5 en position d'ouverture (représentée sur les figures 2 à 4). La roue de transmission 7 est pourvue d'ergots 12, 13 qui sont destinés à coopérer avec une butée 14 solidaire du corps 1. Lorsque l'ergot 12 est en butée contre la butée 14, le papillon 5 est dans une première position de fermeture (représentée sur la figure 6) et, lorsque l'ergot 13 est en appui contre la butée 14, le papillon 5 est dans une deuxième position de fermeture (représentée sur la figure 7). Le papillon 5 est sensiblement perpendiculaire au conduit 3 lorsqu'il est dans sa première position de fermeture et dans sa deuxième position de fermeture, ces positions se trouvant à environ 180° l'une de l'autre. Des résistances, schématisées en 29, s'étendent dans le conduit 3 en aval du papillon 5 et sont fixées au corps 1. Les résistances 29 laissent passer le fluide et sont en forme d'ailettes en aluminium ou de rubans résistifs fins dont l'épaisseur et les formes sont agencées pour ne pas entraver ou perturber l'écoulement du fluide. Les résistances 29 comportent des.moyens, connus en eux-mêmes et non représentés, de liaison à une source d'alimentation en énergie électrique.

Le deuxième conduit 4 est équipé d'un deuxième papillon 15 solidaire d'un axe 16 qui est monté pour pivoter sur le corps 1 et qui possède une extrémité s'étendant en saillie du corps 1 et sur laquelle est montée pour pivoter une deuxième roue de transmission 17. Un support est fixé sur cette extrémité de l'axe 16. Le support définit deux bras 18, 19, s'étendant radialement depuis l'extrémité en saillie de l'axe 6, à l'opposé l'un de l'autre. Chaque bras 18, 19 est pourvu d'un doigt 20, 21 reçu dans une rainure 22, 23, en arc de cercle ménagé dans la roue de transmission 17. Le bras 19 comporte une extrémité libre destinée à venir en butée contre une butée 24 solidaire du corps 1 et définissant la position de fermeture du papillon 15 (représentée sur les figures 2 à 6). Un ressort de torsion 25 s'étend hélicoïdalement autour de ladite extrémité de l'axe 16 et possède une extrémité reliée au doigt 21 et une extrémité opposée reliée au corps 1 pour rappeler le papillon 15 en position de fermeture. En position d'ouverture, le papillon 15 s'étend sensiblement selon l'axe du conduit 4.

Les butées 14, 24 sont fixées sur un support réglable en position par rapport au corps 1.

La vanne ainsi réalisée possède :
- un mode de fonctionnement normal ou primaire dans lequel le papillon 15 est en position de fermeture et le papillon 5 est réglable en position entre sa position d'ouverture et sa première position de fermeture (position intermédiaire représentée en figure 5),
- un mode d'arrêt dans lequel le papillon 15 est dans sa position de fermeture et le papillon 5 est dans sa première position de fermeture (figure 6),
- un mode de fonctionnement secondaire dans lequel le papillon 15 est dans sa position d'ouverture et le papillon 5 est dans sa deuxième position de fermeture (figure 7).

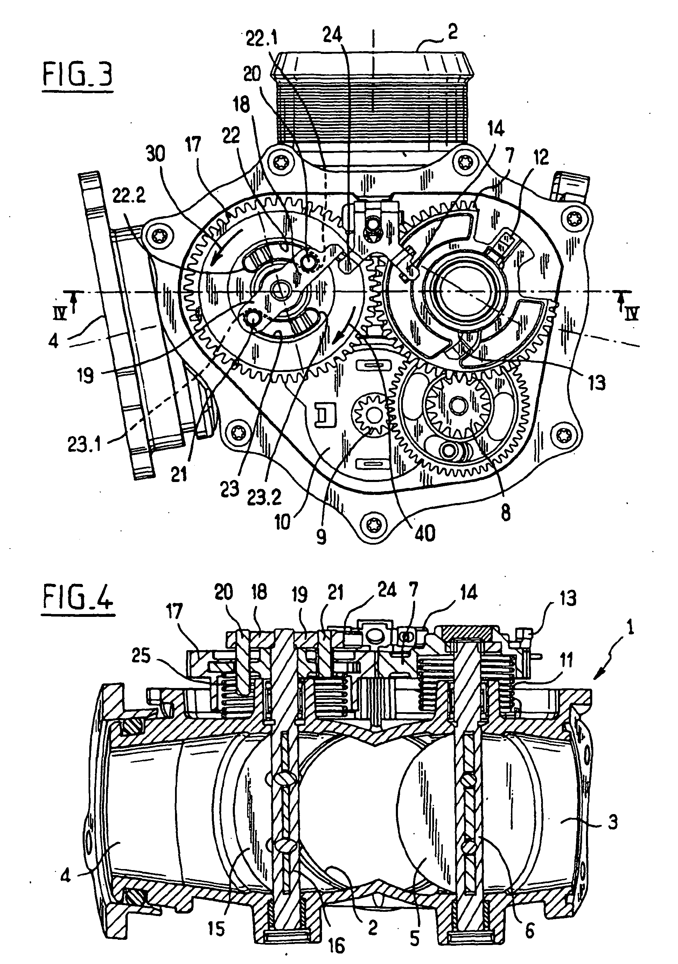

En mode de fonctionnement normal, le moteur 10 pet amener le papillon 5 dans n'importe quelle position comprise entre sa position d'ouverture et sa première position de fermeture (voir la position intermédiaire représentée à la figure 5). Lorsque le papillon 5 est en position d'ouverture (figure 3), les doigts 20, 21 sont reçus dans une extrémité 22.1, 23.1 des rainures 22, 23. Lorsque la roue de transmission 7 pivote entre la position d'ouverture du papillon 5 et sa première position de fermeture, la roue de transmission 7 entraîne la roue de transmission 17 (sens de rotation 40 sur la figure 3) en provoquant le glissement des doigts le long des rainures 22, 23 en direction de l'autre extrémité 22.2, 23.2 de ces rainures. Le papillon 15 est donc immobile, maintenu dans sa position de fermeture par le ressort appliquant l'excroissance du bras 18 contre la butée 24.

Lorsque le papillon 5 est dans sa première position de fermeture, les doigts 20, 21 sont reçus dans les extrémités 22.2, 23.2 des rainures 22, 23 et le papillon 15 est dans sa position de fermeture de sorte que la vanne est dans son mode d'arrêt (figure 6).

Lorsque le papillon 5 est ramené vers sa position d'ouverture depuis sa première position de fermeture, la roue de transmission 7 entraîne la roue de transmission 17 et les doigts passent de l'extrémité 22.2, 22.3 des rainures 22, 23 aux extrémités 22.1, 23.1 sans provoquer de mouvement du papillon 15.

Lorsque la roue de transmission 7 est déplacée pour amener le papillon 5 dans sa deuxième position de fermeture, la roue de transmission 7 provoque une rotation de la roue de transmission 17 dans le sens référencé 30 sur la figure 3. Les doigts 19, 20 étant en butée contre les extrémités 22.1, 23.1 des rainures 22, 23, le pivotement de la roue de transmission 17 va provoquer un pivotement du support et donc de l'axe 16 et du papillon 15. Lorsque le papillon 5 atteint sa deuxième position de fermeture, le papillon 15 est dans sa position d'ouverture. La vanne est dans son mode de fonctionnement secondaire (figure 7).

Lorsque le papillon 5 est ramené de sa deuxième position de fermeture vers sa position d'ouverture (sous l'action également du ressort 11), la roue de transmission 17 est entraînée en sens inverse (sens référencé 40) par la roue de transmission 7 et le ressort 25 exerce sur le doigt 21 un effort de rappel du papillon 15 vers sa position d'obturation.

Les doigts 20, 21 et les rainures 22, 23 forment ainsi un organe d'entraînement unidirectionnel (sens 30) du papillon 15, cet organe étant positif (ou actif) lorsque le papillon 5 est entraîné de sa position d'ouverture vers sa deuxième position de fermeture.

On notera que les axes 6, 16 des papillons 5, 15 sont implantés au voisinage du troisième conduit 2 et que :
- en position d'ouverture, les papillons 5, 15 ont une partie s'étendant en saillie dans le conduit 2, de préférence jusqu'à l'axe du conduit 2, pour guider les gaz et former des déflecteurs ;
- en position de fermeture, les papillons 5, 15 s'étendent au voisinage de la paroi du conduit 2, et de préférence sensiblement en affleurement du conduit 2 et parallèlement à la paroi de celui-ci, pour limiter la formation de zone de recirculation des gaz et autres perturbations du flux de manière à réduire les pertes de charges.

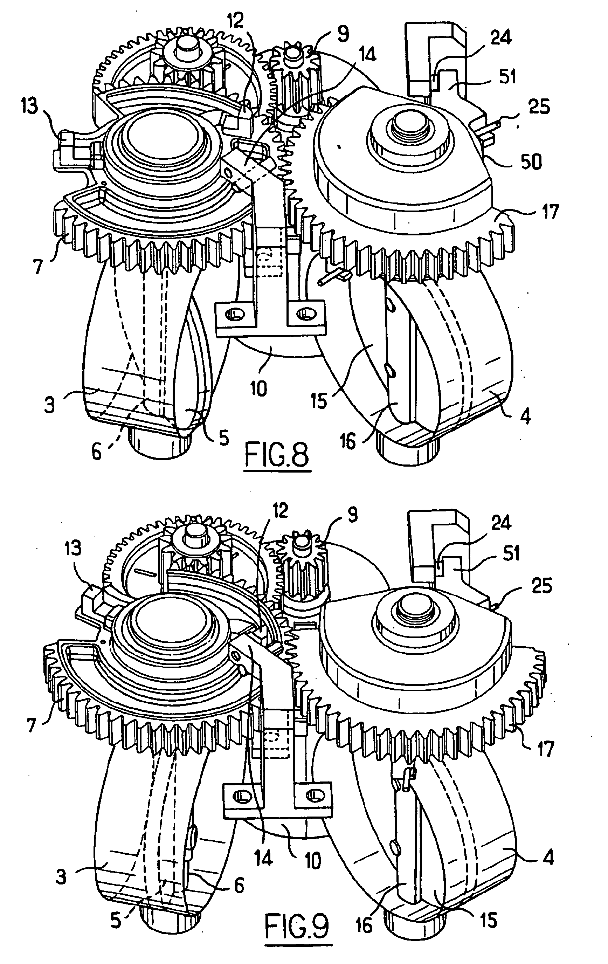

Les éléments identiques, ou analogues à ceux du premier mode de réalisation portent la même référence numérique dans la description du deuxième mode de réalisation en relation avec les figures 8 à 11.

En référence aux figures 8 à 11, la vanne conforme au deuxième mode de réalisation est globalement identique à celle du premier mode de réalisation sauf en ce qui concerne :
- le ressort 11 qui est absent du deuxième mode de réalisation,
- les moyens de liaison de l'axe 16 du papillon 15 à la roue de transmission 17.

Dans ce deuxième mode de réalisation, un support 50 est fixé sur l'extrémité de l'axe 16 sur laquelle la roue de transmission 17 est montée pour pivoter. Le support 50 comporte un bras 51 destiné à venir en butée contre une butée 24 solidaire du corps 1 et définissant la position de fermeture du papillon 15 (figures 8 et 9). La roue de transmission 17 comporte une portion d'appui contre le bras 51.

Le ressort de torsion 25 s'étend hélicoïdalement autour de ladite extrémité de l'axe 16 et possède une extrémité reliée au support 50 et une extrémité opposée reliée à la roue de transmission 17 de manière à appliquer le bras 51 contre la roue de transmission 17 et rappeler le bras 51 vers la butée 24.

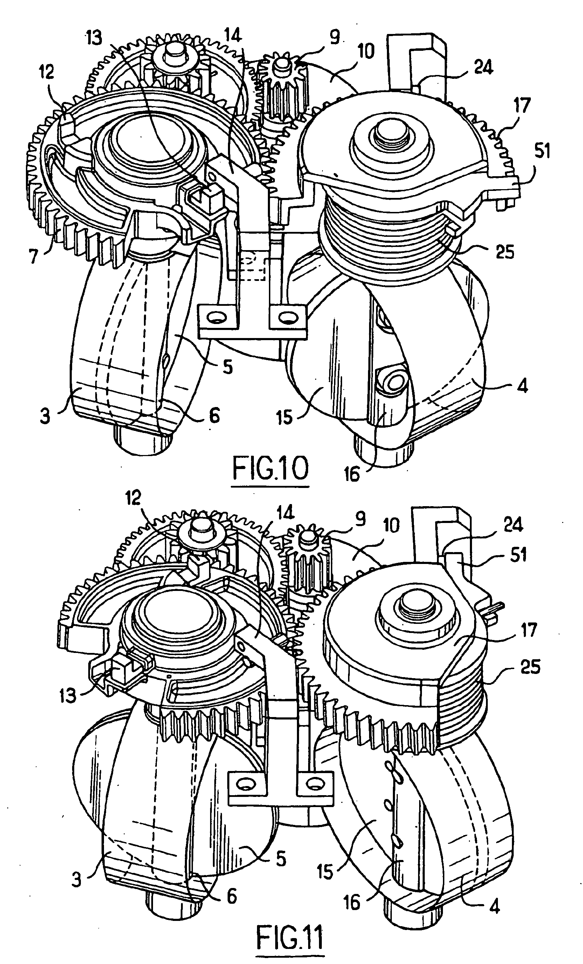

La roue de transmission 17 vient en butée contre le bras 51 du support 56 lorsque la roue de transmission 7 est déplacée pour amener le papillon 5 dans sa position d'ouverture vers sa deuxième position de fermeture et entraîne de manière correspondante la roue de transmission 17. La roue de transmission 17 déplace alors le volet 15 de sa position de fermeture vers sa position d'ouverture par l'intermédiaire du support 50 (figure 10). Lorsque la roue de transmission 7 pivote en sens contraire pour ramener le papillon 5 vers sa position d'ouverture, la roue de transmission 17 est ramenée en butée contre le bras 51 et le ressort de torsion 25 rappelle le support 50 contre la butée 24 (figure 11).

En position d'ouverture du papillon 5, le bras 51 est en butée contre la butée 24 et la roue de transmissinon 15 est en butée contre le bras 51.

Lorsque la roue de transmission 7 est déplacée pour amener le papillon 5 de sa position d'ouverture vers sa première position de fermeture (figure 8), la roue de transmission 17 est déplacée à l'opposé de son appui contre le bras 51 à l'encontre de l'effort exercé par le ressort de torsion 25. Le support 50 reste en butée contre la butée 24 de sorte que le papillon 16 reste en position de fermeture. Le papillon 5 est dans sa première position de fermeture quand l'ergot 12 est en appui contre la butée 14 (figure 9). Lorsque la roue de transmission 7 est déplacée en sens contraire, le papillon 5 est ramené en position d'ouverture (figure 11). On notera qu'en cas de coupure d'alimentation du moteur 10, le ressort de torsion 25 tend à plaquer le bras 51 contre la butée 24 et à faire pivoter la roue de transmission 17 pour l'amener en appui du bras 51 de sorte que le papillon 5 soit en position d'ouverture et le papillon 16 soit en position de fermeture (figure 11).

Bien entendu, l'invention n'est pas limitée aux modes de réalisation décrits et on peut y apporter des variantes de réalisation sans sortir du cadre de l'invention tel que défini par les revendications.

En particulier, la vanne peut avoir une structure différente de celle décrite, notamment en ce qui concerne l'agencement des conduits, la géométrie des papillons, l'entraînement de la deuxième roue de transmission... Les roues de transmission peuvent être entraînées au moyen de courroies. Le moteur peut être en prise avec la première roue de transmission et avec la deuxième roue de transmission, la première roue de transmission ne servant plus alors de lien entre le moteur et la deuxième roue de transmission. Le corps peut être en une ou plusieurs pièces.

L'organe de rappel du deuxième papillon peut être un organe moteur mécanique ou électrique.

L'organe d'entraînement unidirectionnel peut avoir une autre structure que celle décrite et ne comporter par exemple qu'un doigt et une rainure. Un doigt peut également être solidaire de la roue de transmission 17 pour prendre appui sur le bras 19.

Il va de soi que l'agencement selon lequel au moins un des papillons 5, 15 en position d'ouverture a une partie en saillie dans le troisième conduit 2, et au moins un des papillons 5, 15 en position de fermeture s'étend sensiblement au voisinage, voire en affleurement du troisième conduit 2, est applicable à tout type de vanne ayant trois conduits, par exemple une entrée et deux sorties, avec deux papillons commandés par un ou deux moteurs.

De même, les résistances 29 sont utilisables dans tout type de vanne ayant trois conduits, en particulier une entrée et deux sorties. Les moyens de chauffage peuvent être prévus dans l'un et/ou l'autre des conduits et avoir une structure différente de celle décrite.

En outre, le sens de rappel des ressorts et la position de rappel des papillons peuvent être différents de ceux décrits ci-dessus.

La vanne peut avoir de nombreuses applications notamment dans le domaine automobile et plus particulièrement, mais pas exclusivement, dans le circuit d'admission d'un moteur thermique.

## Revendications

1. Vanne comprenant un corps (1) délimitant des premier et deuxième conduits (3, 4) qui débouchent dans un troisième conduit (2) et qui sont pourvus respectivement d'un premier papillon (5) et d'un deuxième papillon (15), **caractérisée en ce que** le premier papillon est solidaire d'une première roue de transmission (7) reliée à un arbre de sortie (9) d'un moteur d'actionnement (10) pour être déplaçable entre une première position de fermeture et une deuxième position de fermeture situées de part et d'autre d'une position d'ouverture du premier conduit, et **en ce que** le deuxième papillon est monté pour pivoter sur une deuxième roue de transmission (17) reliée au moteur d'actionnement et est relié à la deuxième roue de transmission par un élément d'entraînement unidirectionnel (18, 19, 20, 21, 22, 23) positif lorsque le premier papillon est déplacé de sa position d'ouverture à sa deuxième position de fermeture de manière à alors entraîner le deuxième papillon d'une position de fermeture vers une position d'ouverture du deuxième conduit, la vanne comportant un organe de rappel (25) du deuxième papillon vers sa position de fermeture lorsque le premier papillon est déplacé vers sa première position de fermeture.

2. Vanne selon la revendication 1, dans laquelle le moteur d'actionnement (10) est un moteur à courant continu.

3. Vanne selon la revendication 1, dans laquelle le deuxième papillon (15) est solidaire d'un axe (16) ayant une extrémité en saillie du corps (1) et pourvue d'un support radial (18, 19) pour coopérer avec une butée (22.1, 23.1) solidaire de la deuxième roue de transmission (17).

4. Vanne selon la revendication 3, dans laquelle le support radial (18, 19) est équipé d'un doigt (20, 21) parallèle à l'axe et reçu à coulissement dans une gorge (22, 23) en arc de cercle qui est ménagée sur la deuxième roue de transmission et dont une extrémité (22.1, 23.1) forme la butée d'entraînement.

5. Vanne selon la revendication 1, dans laquelle la deuxième roue de transmission (17) est reliée au moteur d'actionnement (10) par la première roue de transmission ( 7).

6. Vanne selon la revendication 1, dans laquelle l'organe de rappel est un ressort de torsion (25) monté entre le deuxième papillon (15) et le corps (1).

7. Vanne selon la revendication 1, dans laquelle le deuxième papillon (15) est solidaire d'un axe (16) ayant une extrémité en saillie du corps 1 et pourvue d'un support (50) solidaire en rotation de l'axe (16), la deuxième roue de transmission (17) est montée libre en rotation sur cette extrémité de l'axe et est reliée au support par un ressort de torsion (25) formant l'organe de rappel et positionné pour rappeler le support (50) vers la position de fermeture du deuxième papillon (15).

8. Vanne selon la revendication 1, dans laquelle au moins un des papillons (5, 15) en position d'ouverture a une partie en saillie dans le troisième conduit (2).

9. Vanne selon la revendication 1, dans laquelle au moins un des papillons (5, 15) en position de fermeture s'étend sensiblement en affleurement du troisième conduit (2).

10. Vanne selon à revendication 8 et la revendication 9, dans laquelle ledit papillon a un axe de pivotement (6, 16) au voisinage du troisième conduit (2).

11. Vanne selon la revendication 1, dans laquelle au moins l'un des premier conduit (3) ou deuxième conduit (4) incorpore des moyens de chauffage (29).

## Claims

1. Valve comprising a body (1) delimiting first and second ducts (3, 4) which open into a third duct (2) and which are respectively provided with a first butterfly (5) and with a second butterfly (15), **characterized in that** the first butterfly is secured to a first transmission wheel (7) connected to an output shaft (9) of an actuating motor (10) so that it can be moved between a first closed position and a second closed position, which positions are situated one on each side of a position in which the first duct is open, and **in that** the second butterfly is mounted in such a way as to pivot on a second transmission wheel (17) connected to the actuating motor and is connected to the second transmission wheel by a one-way positive drive element (18, 19, 20, 21, 22, 23) when the first butterfly is moved from its open position to its second closed position so as then to drive the second butterfly from a closed position into a position in which the second duct is open, the valve comprising a return member (25) returning the second butterfly towards its closed position when the first butterfly is moved towards its first closed position.

2. Valve according to Claim 1, in which the actuating motor (10) is a DC motor.

3. Valve according to Claim 1, in which the second butterfly (15) is secured to an axle (16) having one end projecting out from the body (1) and provided with a radial support (18, 19) to collaborate with a stop (22.1, 23.1) secured to the second transmission wheel (17).

4. Valve according to Claim 3, in which the radial support (18, 19) is equipped with a pin (20, 21) parallel to the axle and housed such that it can slide in a circular-arc-shaped groove (22, 23) formed on the second transmission wheel and of which one end (22.1, 23.1) forms the drive stop.

5. Valve according to Claim 1, in which the second transmission wheel (17) is connected to the actuating motor (10) by the first transmission wheel (7).

6. Valve according to Claim 1, in which the return member is a torsion spring (25) mounted between the second butterfly (15) and the body (1).

7. Valve according to Claim 1, in which the second butterfly (15) is secured to an axle (16) having one end projecting out from the body (1) and provided with a support (50) that rotates as one with the axle (16), the second transmission wheel (17) is mounted free to turn on this end of the axle and is connected to the support by a torsion spring (25) that forms the return member and is positioned to return the support (50) towards the position in which the second butterfly (15) is closed.

8. Valve according to Claim 1, in which at least one of the butterflies (5, 15) in the open position has a part projecting into the third duct (2).

9. Valve according to Claim 1,- in which at least one of the butterflies (5, 15), in a closed position, lies substantially flush with the third duct (2).

10. Valve according to Claim 8 and Claim 9, in which the said butterfly has a pivot axle (6, 16) in the vicinity of the third duct (2).

11. Valve according to Claim 1, in which at least one of either the first duct (3) or the second duct (4) incorporates heating means (29).

## Patentansprüche

1. Ventilschieber, der einen Körper (1) aufweist, der eine erste und eine zweite Leitung (3, 4) begrenzt, die in eine dritte Leitung (2) münden und mit einer ersten Klappe (5) bzw. einer zweiten Klappe (15) versehen sind, **dadurch gekennzeichnet, dass** die erste Klappe mit einem ersten Getrieberad (7) fest verbunden ist, das mit einer Ausgangswelle (9) eines Betätigungsmotors (10) verbunden ist, um zwischen einer ersten geschlossenen Stellung und einer zweiten geschlossenen Stellung, die sich beiderseits einer geöffneten Stellung der ersten Leitung befinden, verlagerbar zu sein, und dass die zweite Klappe so montiert ist, dass sie an einem zweiten Getrieberad (17) schwenken kann, das mit dem Betätigungsmotor verbunden ist, und mit dem zweiten Getrieberad durch ein positives unidirektionales Antriebselement (18, 19, 20, 21, 22, 23) verbunden ist, wenn die erste Klappe aus ihrer geöffneten Stellung in ihre zweite geschlossene Stellung verlagert wird, derart, dass dann die zweite Klappe aus einer geschlossenen Stellung in eine geöffnete Stellung der zweiten Leitung angetrieben wird, wobei der Ventilschieber ein Organ (25) zum Zurückstellen der zweiten Klappe in ihre geschlossene Stellung, wenn die erste Klappe in ihre erste geschlossene Stellung verlagert ist, enthält.

2. Ventilschieber nach Anspruch 1, wobei der Betätigungsmotor (10) ein Gleichstrommotor ist.

3. Ventilschieber nach Anspruch 1, wobei die zweite Klappe (15) mit einer Welle (16) fest verbunden ist, wovon ein Ende von dem Körper (1) vorsteht und mit einem radialen Träger (18, 19) versehen ist, um mit einem Anschlag (22.1, 23.1) zusammenzuwirken, der mit dem zweiten Getrieberad (17) fest verbunden ist.

4. Ventilschieber nach Anspruch 3, wobei der radiale Träger (18, 19) mit einem Zapfen (20, 21) ausgerüstet ist, der zu der Welle parallel ist und in einer kreisbogenförmigen Nut (22, 23) gleitend aufgenommen ist, die in dem zweiten Getrieberad ausgebildet ist und wovon ein Ende (22.1, 23.1) den Antriebsanschlag bildet.

5. Ventilschieber nach Anspruch 1, wobei das zweite Antriebsrad (17) durch das erste Antriebsrad (7) mit dem Betätigungsmotor (10) verbunden ist.

6. Ventilschieber nach Anspruch 1, wobei das Rückstellorgan eine Torsionsfeder (25) ist, die zwischen der zweiten Klappe (15) und dem Körper (1) montiert ist.

7. Ventilschieber nach Anspruch 1, wobei die zweite Klappe (15) mit einer Welle (16) fest verbunden ist, wovon ein Ende vom Körper (1) vorsteht und mit einem Träger (50) versehen ist, der mit der Welle (16) drehfest verbunden ist, wobei das zweite Getrieberad (17) an diesem Ende der Welle frei drehbar montiert ist und mit dem Träger durch eine Torsionsfeder (25) verbunden ist, die das Rückstellorgan bildet und positioniert ist, um den Träger (50) in die geschlossene Stellung der zweiten Klappe (15) zurückzustellen.

8. Ventilschieber nach Anspruch 1, wobei wenigstens eine der Klappen (5, 15) in der geöffneten Stellung einen in die dritte Leitung (2) vorstehenden Teil besitzt.

9. Ventilschieber nach Anspruch 1, wobei sich wenigstens eine der Klappen (5, 15) in der geschlossenen Stellung so erstreckt, dass sie mit der dritten Leitung (2) im Wesentlichen bündig ist.

10. Ventilschieber nach Anspruch 8 und Anspruch 9, wobei die Klappe in der Nähe der dritten Leitung (2) eine Schwenkachse (6, 16) besitzt.

11. Ventilschieber nach Anspruch 1, wobei in die erste Leitung (3) und/oder in die zweite Leitung (4) Heizmittel (29) eingebaut sind.
